Europäisches Patentamt

European Patent Office

Office européen des brevets

(19)

(11) **EP 1 486 953 A1**

(12) **EUROPEAN PATENT APPLICATION**

(43) Date of publication:
**15.12.2004 Bulletin 2004/51**

(51) Int Cl.$^7$: **G11B 5/64**

(21) Application number: **04013857.0**

(22) Date of filing: **14.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **13.06.2003 JP 2003169405**

(71) Applicant: **Fuji Photo Film Co., Ltd.
Kanagawa-ken (JP)**

(72) Inventors:
- **Moriwaki, Kenichi
  Odawara-shi, Kanagawa-Ken 258 (JP)**
- **Usuki, Kazuyuki
  Odawara-shi, Kanagawa-Ken 258 (JP)**

(74) Representative: **HOFFMANN - EITLE
Patent- und Rechtsanwälte
Arabellastrasse 4
81925 München (DE)**

(54) **Magnetic recording medium**

(57)   A magnetic recording medium comprising: a nonmagnetic substrate; an under layer; and a magnetic layer in this order, wherein the magnetic layer has a granular structure comprising a ferromagnetic metal alloy and a nonmagnetic oxide, and a coercive force squareness ratio S* of the magnetic layer satisfies the following relational expression (1):

$$S^* \leqq 0.8 \qquad (1)$$

**EP 1 486 953 A1**

**Description**

FIELD OF THE INVENTION

The present invention relates to a magnetic recording medium, in particular relates to a magnetic recording medium for use in high density magnetic recording of digital information.

BACKGROUND OF THE INVENTION

With the spread of the Internet in recent years, the use form of the computer has been changed, e.g., to the form of processing a great volume of motion picture data and sound data with a personal computer. Along with these trends, the storage capacity required of the magnetic recording media, such as hard discs, has increased.

In a hard disc apparatus, a magnetic head slightly floats from the surface of a magnetic disc with the rotation of the magnetic disc, and magnetic recording is done by non-contact recording system. This mechanism prevents the magnetic disc from breaking by the touch of the magnetic head and the magnetic disc. With the increase of the density of magnetic recording, the floating height of a magnetic head is gradually decreased, and now the floating height of from 10 to 20 nm has been realized by the use of a magnetic disc comprising a specularly polished hyper-smooth glass substrate having provided thereon a magnetic layer. In such a magnetic recording medium, a CoPtCr series magnetic layer and a Cr under layer are generally used, and the direction of easy magnetization of the CoPtCr series magnetic layer is controlled in the direction of in-plane of the film by the Cr under layer by increasing the temperature as high as 200 to 500°C. Further, by accelerating the segregation of Cr in the CoPtCr series magnetic layer, the magnetic domain in the magnetic layer is segregated. Areal recording density and recording capaci ty of hard di sc drive have markedly increased during the past few years by technological innovation, e.g., the floating height reduction of a head, the improvement of the structure of a head, and the improvement of the recording film of a disc.

With the increase of throughput of digital data, there arises a need of moving a high capacity data, such as movie data, by recording on a commutable medium. However, since the substrate of a hard disc is made of a hard material and the distance between a head and a disc is extremely narrow as described above, there is the fear of happening of accident by the impact during operation and entraining dusts when a hard disc is used as a commutable medium such as a flexible disc and a rewritable optical disc, and so a hard disc cannot be used.

Further, when a high temperature sputtering film-forming method is used in manufacturing a magnetic recording medium, not only the productivity is poor but also the cost in mass production increases, therefore, hard discs cannot be manufactured inexpensively.

On the other hand, the substrate of a flexible disc comprises a flexible polymer film and is excellent in commutability, since a flexible disc is a medium capable of contact recording, and flexible discs can be manufactured inexpensively. However, commercially available flexible discs of nowadays have such a structure that recording layers are formed on a polymer film by coating magnetic powder with a polymer binder and an abrasive. Therefore, the high density recording characteristics of the magnetic layer of flexible discs are inferior to those of hard discs having a magnetic layer formed by sputtering, and the achieved recording density of flexible discs is only 1/10 or less of that of hard discs.

Accordingly, a ferromagnetic metal thin film type flexible disc having a recording layer formed by the same sputtering method as in hard discs is suggested. However, when it is tried to form the same magnetic layer as that of hard discs on a polymer film, the polymer film is greatly damaged byheatand it is difficult toput such a flexible disc topractical use. Therefore, it is also suggested to use highly heat resistant polyimide and aromatic polyamide films as the polymer films, but these heat resistant films are very expensive and it is also difficult to put them to practical use. When it is tried to form a magnetic layer with cooling so as not to give thermal damage to the polymer films, the magnetic characteristics of the magnetic layer are insufficient, so that recording density can be hardly improved.

On the other hand, it has come to be known that when a ferromagnetic metal thin film magnetic layer comprising a ferromagnetic metal alloy and a nonmagnetic oxide and an Ru under layer are used, almost the same magnetic characteristics as those of the CoPtCr series magnetic layer formed under a high temperature condition of from 200 to 500°C can be obtained even when film formation is performed under room temperature. As such a ferromagneticmetal thin filmmagnetic layer comprising a ferromagnetic metal alloy and a nonmagnetic oxide, a so-called granular structure that is proposed in hard discs can be used (refer to, e.g., JP-A-5-73880 (The term "JP-A" as used herein refers to an "unexamined published Japanese patent application".) and JP-A-7-311929).

However, at the time of recording and reproducing using a GMR head in further higher density recording, low noise is required but satisfactory low noise is not achieved under the present situation, so that further improvement of S/N characteristics is required.

In direct read after write and rewritable optical discs typified by DVD-R/RW, a head and a disc are not close to each other as in a magnetic disc, and so they are excellent in commutability and widespread. However, from the thickness of light pickup and economical viewpoints, it is difficult for optical discs to take such a disc structure that both surfaces can be used as recording surfaces as in magnetic discs which are advantageous to improve capacity. In addition, the optical discs are low in areal recording density and in data transfer velocity as compared with magnetic discs, so that it cannot be said that the performances of optical discs are sufficient to be used as rewritable high capacity recording media.

SUMMARY OF THE INVENTION

As described heretofore, although the requirement for rewritable high capacity commutable recording media is high, those that satisfy performances, reliability and costs are not yet realized.

Accordingly, an object of the present invention is to solve the above problems, that is, an object of the present invention is to provide an inexpensive high capacity magnetic recording medium capable of forming an under layer and a magnetic layer in this order at room temperature, having high performance and capable of highly reliable recording.

As a result of eager investigation by the present inventor , the above object can be achieved by adopting the following constitution, thus the present invention has been accomplished.

That is, the present invention is as follows.

(1) Amagnetic recording medium comprising a nonmagnetic substrate having provided on at least one side of the substrate an under layer and a magnetic layer in this order, wherein the magnetic layer has a granular structure comprising a ferromagnetic metal alloy and a nonmagnetic oxide, and the coercive force squareness ratio S* satisfies the following relational expression (1):

$$S^* \leqq 0.8 \tag{1}$$

The preferred embodiments of the present invention are described below.

(2) The magnetic recording medium as described in the above item (1) , wherein the nonmagnetic substrate is a flexible polymer support.

(3) The magnetic recording medium as described in the above item (1), wherein the nonmagnetic substrate is a glass substrate or an aluminum substrate, and the temperature of the substrate in forming the under layer and the magnetic layer is from 0 to 80°C.

(4) The magnetic recording medium as described in the above item (1) , (2) or (3), wherein the coercive force squarenes s ratio S* satisfies the following relational expression (2):

$$0.3 \leqq S^* \leqq 0.75 \tag{2}$$

That is, since the magnetic recording medium according to the invention has a ferromagnetic metal thin film magnetic layer having a granular structure as described later comprising a ferromagnetic metal alloy and a nonmagnetic oxide, recording of high recording density similar to hard discs and the heightening of capacity are possible even when film formation is performed at room temperature.

Further, by sufficiently segregating the magnetic particles (a ferromagnetic metal alloy) in a magnetic layer, it becomes possible to make the coercive force squareness ratio (S*) of a medium, which highly correlates with the interaction among magnetic particles, 0.8 or less.

If the segregation of magnetic particles is not sufficient, the coercive force squareness ratio (S*) of a medium becomes the value exceeds 0.8. In such a medium, the interaction among magnetic particles becomes very strong, so that the resolution of minute recording signal lowers in high density recording, which leads to the increase of noise.

Magnetic particles can be segregated by the crystal structure of an under layer and by the control of Ar pressure and electric power to be charged in magnetic layer formation.

By using these magnetic layer and under layer, heating of a substrate as conventionally performed becomes unnecessary, and a magnetic recording medium having good S/N characteristics can be obtained even when the temperature of a substrate is room temperature. That is , substrate temperature T can be made from 0 to 80°C when an under layer and a magnetic layer are formed, the present invention can provide flat magnetic tapes and flexible discs resisting to contact recording with not only a glass substrate andAl substrate but also a polymer film support without causing heat damage.

DETAILED DESCRIPTION OF THE INVENTION

The magnetic recording medium in the invention is described in detail below.

Although an aluminum substrate and a glass substrate can be used as the substrate of the magnetic recording medium in the invention, it is preferred to use a flexible polymer film in the point of productivity. The magnetic recording medium in the invention can be used as a tape medium and a flexible disc medium.

The flexible disc of the magnetic recording medium in the invention using a flexible polymer film substrate has a structure having a center hole formed in the central part, and the disc is encased in a plastic cartridge. The cartridge is generally provided with an access window covered with a metal shutter, and a magnetic head is introduced to the flexible disc through the access window, thereby recording of signals on the flexible disc and reproduction are performed.

The magnetic recording medium according to the invention is a magnetic recording medium comprising a nonmagnetic substrate having provided on at least one side of the substrate an under layer and a magnetic layer in this order, and themagnetic layer has a granular structure comprising a ferromagnetic metal alloy and a nonmagnetic oxide, and the coercive force squareness ratio S* satisfies the following relational expression (1):

$$S^* \leqq 0.8 \tag{1}$$

The nonmagnetic substrate of the magnetic recording medium according to the invention preferably comprises a flexible polymer support, a glass substrate or an aluminum substrate, more preferably comprises a flexible polymer support, the substrate temperature is from 0 to 80°C when an under layer and a magnetic layer are formed, andmore preferably the coercive force squareness ratio S* satisfies the following relational expression (2):

$$0.3 \leqq S^* \leqq 0.75 \tag{2}$$

The coercive force squareness ratio S* of the magnetic recording medium in the invention satisfies the relational expression (1), $S^* \leqq 0.8$, preferably satisfies the relational expression (2), $0.3 \leqq S^* \leqq 0.75$. When the coercive force squareness ratio (S*) becomes as high as exceeding 0.8, the segregation of magnetic particles is not sufficient and the interaction among magnetic particles becomes very strong, so that the resolution of minute recording signal lowers in high density recording, which unfavorably leads to the increase of noise.

The magnetic recording medium in the invention comprises a nonmagnetic substrate having provided on at least one side of the substrate an under layer and a magnetic layer in this order.

Magnetic layer:

A magnetic layer formed in the magnetic recording medium in the invention may be an in-plane magnetic recording layer having the axis of easy magnetization oriented in the horizontal direction to the substrate or may be a perpendicular magnetic recording layer oriented in the perpendicular direction to the substrate. The direction of the axis of easy magnetization can be controlled by the materials and crystal structure of an under layer and the composition and film forming condition of a magnetic layer.

As described above, the magnetic layer in the invention is a magnetic layer comprising a ferromagnetic metal alloy and a nonmagnetic oxide. A ferromagnetic metal alloy and a nonmagnetic oxide are mixed macroscopically, but they take the granular structure that a nonmagnetic oxide covers ferromagnetic metal alloy fine particles microscopically. The size of the ferromagnetic metal alloy fine particles is from 1 to 110 nm or so. A high coercive force can be obtained and the variation of the magnetic particle sizes becomes uniform by this structure, so that a low noise medium can be achieved.

As ferromagnetic metal alloys, alloys containing Co and at least one of Cr, Pt, Ni, Fe, B, Si, Ta, Nb, Ru and the like can be used, and Co-Pt-Cr, Co-Pt-Cr-Ta, Co-Pt-Cr-B and Co-Ru-Cr are particularly preferably used considering recording characteristics.

As nonmagnetic oxides, oxides of Si, Zr, Ta, B, Ti, Al, Cr, Ba, Zn, Na, La, In and Pb can be used, and $SiO_x$ is most preferred considering recording characteristics.

The mixing ratio of a ferromagnetic metal alloy to a nonmagnetic oxide is ferromagnetic metal alloy/ nonmagnetic oxide of preferably from 95/5 to 80/20, and particularly preferably from 90/10 to 85/15. When the mixing ratio of a ferromagnetic metal alloy is 95% or less, the segregation among magnetic particles becomes sufficient and the coercive force does not lower. When the mixing ratio of a ferromagnetic metal alloy is 80% or more, magnetic susceptibility does not lower and the output of signals does not decrease.

The thickness of a magnetic layer comprising a ferromagnetic metal alloy and a nonmagnetic oxide is preferably from 5 to 40 nm, more preferably from 5 to 30 nm. When the thickness is 40 nm or less, the interaction among the columns of magnetic particles does not increase by the particle growth and the coercive force squareness ratio (S*) does not increase, by which conspicuous increase of noise does not occur, at the same time the medium has the resistance to the stress applied at the time of head-medium contact and the reduction of running durability is not caused. While when the thickness is 5 nm or more, the output does not decrease.

A magnetic layer comprising a ferromagnetic metal alloy and a nonmagnetic oxide can be formed by vacuum film-forming methods, e.g., vacuum deposition and sputtering. Of these methods, a sputtering method is preferably used in the invention for capable of forming a high quality and hyper thin film with ease. As a sputtering method, any of well-known DC sputtering methods and RF sputtering methods can be used in the invention. A web sputtering system of continuously forming a layer on a continuousfilmispreferablyused, andabatch sputtering system and an in-line sputtering system as used in the manufacture of hard discs can also be used in the present invention.

General argon gases can be used as the gas in sputtering but other rare gases can also be used. A trace amount of oxygen gas may be introduced for adjusting the oxygen contents of nonmagnetic oxides or for the purpose of surface oxidation.

For forming a magnetic layer comprising a ferromagnetic metal alloy and a nonmagnetic oxide by a sputtering method, it is possible to use two kinds of a ferromagnetic metal alloy target and a nonmagnetic oxide target and use a co-sputtering method of these two targets. However, for improving magnetic particle size variation to thereby form a uniform film, it is preferred to use an alloy target of a ferromagnetic metal alloy and a nonmagnetic oxide. The alloy target can be manufactured by a hot press method.

In manufacturing a magnetic layer comprising a ferromagneticmetal alloy and a nonmagnetic oxide by a sputtering method, the pressure of Ar is preferably from 5 to 100 mTorr (from 0. 665 to 13.3 Pa), and particularly preferably from 10 to 50 mTorr (from 1.33 to 6.65 Pa). When the Ar pressure in film formation is 5 mTorr (0.665 Pa) or more, the segregation among magnetic particles becomes sufficient and the coercive force squareness ratio (S*) does not increase. As a result, the interaction among magnetic particles is small, and a low noise medium can be obtained. Further, when the Ar pressure in film formation is 100 mTorr (13.3Pa) or less, the segregation among magnetic particles is sufficient, the crystallizability of a magnetic layer is good, sufficient magnetic characteristics can be obtained, and a highly reliable medium having high film strength can be obtained,

When a magnetic layer comprising a ferromagnetic metal alloy and a nonmagnetic oxide is formed by a sputtering method, electric power to be charged is preferably from 1 to 100 $W/cm^2$, particularly preferably from 2 to 50 $W/cm^2$. When the electric power charged is 1 $W/cm^2$ or more, the energy of sputtered particles is high, thus the crystallizability does not lower, and also the adhesion of the film does not lower. On the other hand, when the electric power charged is 100 $W/cm^2$ or less, the energy of sputtered particles is not excessive, a shock given to the substrate is small, so that neither the deformation of the substrate nor cracks on the sputtered film occur.

Under layer:

An under layer in the magnetic recording medium in the invention is provided for the purpose of controlling the crystal orientation of a magnetic layer. As such an under layer, Ru alloys can be used but alloys containing other elements can also be used. By using such an under layer, the orientation of a magnetic layer can be heightened, so that recording characteristics are improved.

The thickness of an under layer is preferably from 5 to 200 nm, particularly preferably from 5 to 100 nm. When the thickness is 200 nm or less, good productivity can be achieved, crystal particles do not thicken, noise does not increase, the resistance to the stress applied at the time of head-medium contact increases, and the reduction of running durability is not brought about. When the thickness is 5 nm or more, the improvement of magnetic characteristics can be obtained due to an under layer effect.

An under layer can be formed by vacuum film-forming methods , e.g., vacuum deposition and sputtering. Of these methods, a sputtering method is preferably used in the invention for capable of forming a high quality and hyper thin film with ease. As a sputtering method, any of well-known DC sputtering methods and RF sputtering methods can be used in the invention. A web sputtering systemof continuously forming a layer on a continuous film is preferably used in the case of a flexible disc using a flexible polymer film support, and a batch sputtering system and an in-line sputtering system as used in the case where an aluminum substrate and a glass substrate are used can also be used in the present invention.

General argon gases can be used as the gas in sputtering an under layer but other rare gases can also be used. A trace amount of oxygen gas may be introduced for controlling the lattice constant of an under layer.

Nonmagnetic substrate:

Nonmagnetic substrates (hereinafter also referred to as supports) used in the magnetic recording medium in the invention are not particularly restricted but for avoiding the impact by the touch of a magnetic head and a magnetic disc, flexible resin films (flexible polymer supports) are preferably exemplified. As such resin films, resin films comprising aromatic polyimide, aromatic polyamide, aromatic polyamideimide, polyether ketone, polyethersulfone, polyether imide, polysulfone, polyphenylene sulfide, polyethylene naphthalate, polyethylene terephthalate, polycarbonate, triacetate cellulose and fluorine resin are exemplified. Polyethylene terephthalate and polyethylene naphthalate are particularly preferably used in the invention from the viewpoint of the cost and surface property, since good recording characteristics can be achieved without heating a substrate.

A lamination comprising a plurality of resin films may be used as a nonmagnetic support. By using a laminated film, warp and waviness resul ting from a support itself can be reduced, which conspicuously improve the scratch resistance of a magnetic layer.

As laminating methods, roll lamination by heat rollers, lamination by plate hot press, dry lamination of laminating by coating an adhesive on the adhesion surface, and lamination of using an adhesive sheet formed in advance in the form of a sheet are exemplified. The kinds of adhesives are not especially restricted and a general hot melt adhesive, a thermosetting adhesive, a UV-curable type adhesive, an EB-curable type adhesive, an adhesive sheet, and an anaerobic adhesive can be used.

The thickness of a nonmagnetic support is from 10 to 200 μm, preferably from 20 to 150 μm, and more preferably from 30 to 100 μm. When the thickness of a nonmagnetic support is 10 μm or more, stability at the time of high velocity rotation does not decrease and run out does not increase. While when the thickness of a nonmagnetic support is 200 pm or less, the rigidity at the time of rotation does not increase and it becomes possible to avoid the impact due to the touch, and a magnetic head does not jump.

The nerve of a nonmagnetic support represented by the following equation is preferably from 4.9 to 19.6 MPa (from 0.5 to 2.0 kgf/mm$^2$) when b is 10 mm, and more preferably from 6. 9 to 14.7 MPa (from 0.7 to 1.5 kgf/mm$^2$).

$$\text{Nerve of nonmagnetic support} = Ebd^3/12$$

In the equation, E represents a Young's modulus, b represents a film breadth, and d represents a film thickness.

The surface of a nonmagnetic support is preferably as smooth as possible for performing recording by a magnetic head. The unevenness of the surface of a support markedly degrades the recording and reproducing characteristics of signals. Specifically, when an undercoat layer described later is used, the surface roughness in center line average surface roughness (Ra) measured with an optical surface roughness meter is 5 nm or less, preferably 2 nm or less, and the height of spine (projection) measured with a feeler type roughness meter is 1 μm or less, preferably 0.1 μm or less. When an undercoat layer is not used, the surface roughness in center line average surface roughness (Ra) measured with an optical surface roughness meter is 3 nm or less, preferably 1 nm or less, and the height of spine measured with a feeler type roughness meter is 0.1 μm or less, preferably 0.06 μm or less.

Besides the above-described under layer and magnetic layer, the magnetic recording medium in the invention may be provided with other layers.

For example, a flexible disc has under layers and magnetic layers on both sides of a disc-like support comprising a flexible polymer film, and the flexible disc may further have undercoat layers for improving a surface property and a gas barrier property, gas barrier layers having functions of adhesion and gas barrier, seed layers for increasing crystal orientation of under layers and imparting electrical conductivity just under the under layers, protective layers for protecting the magnetic layers from corrosion and abrasion, and lubricating layers for improving running durability and anticorrosion.

When these other layers are formed, it is preferred that these layers be laminated in the order of an undercoat layer, a gas barrier layer, a seed layer, an under layer, a magnetic layer, a protective layer and a lubricating layer.

Undercoat layer:

It is preferred to provide an undercoat layer on the surface of a nonmagnetic support for the purpose of improving a plane surface property and a gas-barrier property. For forming a magnetic layer by sputtering, it is preferred that an undercoat layer be excellent in heat resistance. As the materials of an undercoat layer, e.g., polyimide resins, polyamideimide resins, silicone resins and fluorine resins can be used. Thermosetting polyimide resins and thermosetting silicone resins have a high smoothing effect and particularly preferred. The thickness of an undercoat layer is preferably from 0.1 to 3.0 μm. When other resin films are laminated on a support, an undercoat layer may be formed before lamination processing, or an undercoat layer may be formed after lamination processing.

As thermosetting polyimide resins, polyimide resins obtained by thermal polymerization of an imide monomer having two or more unsaturated terminal groups in the molecule, e.g., bisallylnadiimide (BANI manufactured by Maruzen Petrochemical Co., Ltd.) are preferably used. This imide monomer can be thermally polymerized at a relatively low temperature after being coated in the state of a monomer on the surface of a support, and so the material monomer can be directly coated on a support and cured. Further, this imide monomer can be used by being dissolved in ordinary solvents, is excellent in productivity and working efficiency, has a small molecular weight, and a solution of the imide monomer is low in viscosity, so that it gets into the unevenness well in coating and is excellent in smoothing effect.

As thermosetting silicone resins, silicone resins obtained by polymerization by a sol-gel method with silicone compounds having introduced an organic group as the starting material are preferably used. The silicone resins have a structure in which a part of the silicon dioxide bonds is substituted with an organic group, and the resins are greatly excellent in heat resistance as compared with silicone rubbers and more flexible than silicon dioxide films, therefore, cracking and peeling are hardly generated when a film of the silicone resins is formed on a support comprising a flexible film. In addition, since the starting material monomers can be directly coated on a support and hardened, general-purpose solvents can be used, the resins get into the unevenness well, and smoothing effect is high. Further, since condensation polymerization reaction advances from comparatively low temperature by the addition of a catalyst such as an acid and a chelating agent, hardening can be expedited, and a resin film can be formed with a general-purpose coating apparatus. Thermosetting silicone resins are excellent in a gas barrier property of shielding gases generating from a support when a magnetic layer is formed and hindering the crystallizability and orientation of the magnetic layer and the under layer, so that they can be particularly preferably used.

It is preferred to provide minute spines (texture) on the surface of an undercoat layer for the purpose of reducing the real contact area of a magnetic head and a magnetic disc and improving a tribological property. Furthermore, the handling property of a support can be improved by providing minute spines. As methods of forming minute spines, a method of coating spherical silica particles and a method of coating an emulsion to thereby form the spines of an organic substance can be used, and a method of forming minute spines by coating spherical silica particles is preferred for ensuring the heat resistance of the undercoat layer.

The height of minute spines is preferably from 5 to 60 nm, more preferably from 10 to 30 nm. When the height of spines is 60 nm or less, deterioration of the recording/reproducing characteristics of signals by the spacing loss between the recording/reproducing heads and the medium does not occur. An improving effect of a tribological property can be achieved when the height of minute spines is 5 nm or more.

The density of minute spines is preferably from 0.1 to 100/$\mu m^2$, and more preferably from 1 to 10/$\mu m^2$. When the density of minute spines is 0.1/$\mu m^2$ or more, an improving effect of a tribological property can be obtained, and when the density is 100/$\mu m^2$ or less, agglomerated particles do not increase, and high spines do not increase, so that recording/reproducing characteristics do not deteriorate.

Minute spines can also be fixed on the surface of a support with a binder. It is preferred to use resins having sufficient heat resistance as the binder. As the resins having heat resistance, solvent-soluble polyimide resins, thermosetting polyimide resins and thermosetting silicone resins are particularly preferably used.

Gas barrier layer:

It is preferred that the magnetic recording medium in the invention be provided with a gas barrier layer between a substrate and an under layer for the purpose of the improvement of adhesion and gas barrier.

As such a gas barrier layer, a single substance of nonmetallic elements, mixtures of nonmetallic elements, or compounds comprising Ti and nonmetallic elements can be used. These materials have resistance to the stress applied at the time of head-medium contact.

The thickness of a gas barrier layer is preferably from 5 to 200 nm, particularly preferably from 5 to 100 nm. When the thickness is 200 nm or less, productivity does not lower, crystal particles do not thicken and noise does not increase. When the thickness is 5 nm or more, the effect of a gas barrier layer can be obtained.

A gas barrier layer can be formed by vacuum film-forming methods, e.g., vacuum de position and sputtering. A high quality and hyper thin film can be formed easily by a sputtering method.

Seed layer:

A seed layer may be provided just under an under layer of the magnetic recording medium of the present invention for the purpose of increasing crystal orientation of the under layer and imparting electrical conductivity.

As the seed layer, Ti and W alloys are preferably used, but other alloys may also be used.

The thickness of the seed layer is preferably from 1 to 30 nm. When the thickness of the seed layer is 30 nm or less, the productivity does not lower, crystal particles do not thicken, and noise does not increase. When the thickness is 1 nm or more, a sufficient seed layer effect can be obtained.

A seed layer can be formed by vacuum film-forming methods, e.g., vacuum deposition and sputtering. Of these methods, a sputtering method can form a high quality and hyper thin film with ease.

Protective layer:

It is preferred to provide a protective layer on the surface of a magnetic layer. A protective layer is provided for the purpose of preventing the corrosion of the metallic materials contained in a magnetic layer, and preventing the abrasion of a magnetic layer by the pseudo contact or contact sliding of a magnetic head and a magnetic disc, to thereby improve running durability and anticorrosion. Materials such as oxides, e.g., silica, alumina, titania, zirconia, cobalt oxide and nickel oxide, nitrides, e.g., titanium nitride, silicon nitride and boron nitride, carbides, e.g., silicon carbide, chromium carbide and boron carbide, and carbons, e.g., graphite and amorphous carbon can be used in a protective layer.

A protective layer is a hard film having hardness equal to or higher than the hardness of the material of a magnetic head, and materials which hardly cause burning during sliding and stably maintain the effect are preferred, since such hard films are excellent in tribological durability. At the same time, materials having fewer pinholes are excellent in anticorrosion and preferred. As such a protective layer, hard carbon films called DLC (diamond-like carbon) manufactured by an RF plasma CVD system, an ion beam system and an ECR system are exemplified.

A protective layer may be formed by the lamination of two or more kinds of thin films having different properties. For example, it becomes possible to reconcile anticorrosion and durability on a high level by providing a hard carbon protective film on the surface side for improving a tribological property and a nitride protective film, e.g. , silicon nitride, on the magnetic recording layer side for improving anticorrosion.

Lubricating layer:

A lubricating layer is provided on a protective layer for improving running durability and anticorrosion, if necessary. Lubricants, e.g., well-known hydrocarbon lubricants, fluorine lubricants and extreme pressure additives, are used in a lubricating layer.

As hydrocarbon lubricants, carboxylic acids, e.g., stearic acid and oleic acid, esters, e.g., butyl stearate, sulfonic acids, e.g., octadecylsulfonic acid, phosphoric esters, e.g., monooctadecyl phosphate, alcohols, e.g., stearyl alcohol and oleyl alcohol, carboxylic acid amides, e . g . , stearic acid amide, and amines, e.g., stearylamine, are exemplified.

The examples of fluorine lubricants include lubricants obtained by substituting a part or all of the alkyl groups of the above hydrocarbon lubricants with fluoroalkyl groups or perfluoro polyether groups. The examples of perfluoro polyether groups include a perfluoromethylene oxide polymer, a perfluoroethylene oxide polymer, a perfluoro-n-propylene oxide polymer $(CF_2CF_2CF_2O)_n$, a perfluoroisopropylene oxide polymer $[CF(CF_3)CF_2O]_n$, and copolymers of these polymers. Specifically, perfluoromethylene-perfluoroethylene copolymers having hydroxyl groups at molecular chain terminals (FOMBLIN Z-DOL, trade name, manufactured by Ausimont K.K. ) are exemplified.

As extreme pressure additives, phosphoric esters, e.g., trilauryl phosphate, phosphorous esters, e.g., trilauryl phosphite, thiophosphorous esters, e.g., trilauryl trithiophosphite, thiophosphoric esters, and sulfur extreme pressure additives, e.g., dibenzyl disulfide, are exemplified.

These lubricants can be used alone or a plurality of lubricants can be used in combination. A lubricating layer can be formed by coating a solution obtained by dissolving a lubricant in an organic solvent on the surface of a protective layer by spin coating, wire bar coating, gravure coating or dip coating, alternatively depositing a lubricant on the surface of a protective layer by vacuum deposition. The coating amount of a lubricant is preferably from 1 to 30 mg/m$^2$, and particularly preferably from 2 to 20 mg/m$^2$.

It is preferred to use rust preventives in combination with a lubricant for bettering anticorrosion. As the examples of rust preventives, nitrogen-containing heterocyclic rings, e.g., benzotriazole, benzimidazole, purine and pyrimidine, derivatives obtained by introducing alkyl side chains to the mother nuclei of these nitrogen-containing heterocyclic rings, nitrogen- and sulfur-containing heterocyclic rings, e.g., benzothiazole, 2-mercaptobenzothiazole, tetraazaindene ring compounds and thiouracil compounds, and derivatives of these nitrogen- and sulfur-containing heterocyclic rings are exemplified. A rust preventive may be mixed with a lubricant and coated on a protective layer, alternatively a rust preventive may be coated on a protective layer prior to the coating of a lubricant, and then a lubricant may be coated thereon. The coating amount of rust preventives is preferably from 0.1 to 10 mg/m$^2$, and particularly preferably from 0.5 to 5 mg/m$^2$.

A disc-like magnetic recording medium is generally provided with each layer on both sides of a support. A tape-like medium is generally provided with each layer on one side of a support, but each layer may be provided on both sides.

EXAMPLES

The present invention is described in further detail below with reference to examples, however the present invention is not limited thereto.

EXAMPLE 1

An undercoat layer coating solution comprising 3-glycidoxypropyltrimethoxysilane, phenyltriethoxysilane, hydrochloric acid, aluminum acetylacetonate and ethanol was coated on a polyethylene naphthalate (PEN) film having a thickness of 63 μm and surface roughness (Ra) of 1.4 nm by gravure coating, and the coated solution was subjected to drying and curing at 100°C, thereby an undercoat layer having a thickness of 1.0 μm comprising a silicone resin was formed.

A solution comprising silica sol having a particle size of 25 nm having mixed with the above undercoat layer coating solution was coated on the undercoat layer by gravure coating, thereby spines having a height of 15 nm were formed on the undercoat layer in density of $10/\mu m^2$. The undercoat layer was formed on both sides of the PEN film. The web was mounted on a web sputtering system and the following layers were formed on the undercoat layer by a DC magnetron sputtering method at room temperature by moving the web with closely adhering to a can (a film-forming roll) cooled by water: a gas barrier layer comprising C in a thickness of 30 nm, an under layer comprising Ru in a thickness of 20 nm on the condition of Ar pressure of 20 mTorr (2.66 Pa), and a magnetic layer comprising $(Co_{70}\text{-}Pt_{20}\text{-}Cr_{10})_{88}\text{-}(SiO_2)_{12}$ in a thickness of 20 nm on the condition of Ar pressure of 20 mTorr (2.66 Pa).

These gas barrier layer, under layer and magnetic layer were formed on both sides of the PEN film. Subsequently, the web was mounted on a web type CVD apparatus, and a nitrogen-added DLC protective layer comprising C/H/N of 62/29/7 in molar ratio was formed in a thickness of 10 nm by an RF plasma CVD method using ethylene gas, nitrogen gas and argon gas as reaction gases. At this time, bias voltage of -500 V was applied to the magnetic layer. The protective layer was also provided on both sides of the PEN film. In the next place, a lubricating layer having a thickness of 1 nm was formed on the surface of theprotective layer by coating a solution obtainedbydissolving a perfluoro polyether lubricant having hydroxyl groups at the molecule terminals (FOMBLIN Z-DOL, manufactured by Montefluos Co.) in a fluorine lubricant (HFE-7200,manufacturedbySumitomo 3M Limited) by gravure coating. The lubricating layer was also formed on both sides of the film. A 3.5 inch size magnetic disc was punched out of the web, subjected to tape burnishing treatment, and built into a resin cartridge (for Zip 100, manufactured by Fuji Photo Film Co., Ltd.) , thereby a flexible disc was obtained.

EXAMPLE 2

A disc-like sheet having a diameter of 130 mm was punched out of the web in Example 1 having formed thereon an under layer and fixed on a circular ring. A gas barrier layer, an under layer and a magnetic layer respectively having the same compositions as in Example 1 were coated on both sides of the sheet by a batch sputtering system, further DLC protective layers were formed by a CVD system. The same lubricating layers as in Example 1 were formed on the sheet by dip coating. A 3.5 inch size disc was punched out of the sheet, subjected to tape burnishing treatment, and built into a resin cartridge (for Zip 100, manufactured by Fuji Photo Film Co., Ltd.), thereby a flexible disc was obtained.

EXAMPLE 3

A flexible disc was manufactured in the same manner as in Example 1 except for changing the thickness of the magnetic layer to 15 nm.

EXAMPLE 4

A flexible disc was manufactured in the same manner as in Example 1 except for forming the magnetic layer on the condition of Ar pressure of 40 mTorr (5.32 Pa).

EXAMPLE 5

A flexible disc was manufactured in the same manner as in Example 1 except for forming the magnetic layer on the condition of Ar pressure of 10 mTorr (1.33 Pa).

EXAMPLE 6

A hard disc was manufactured in the same manner as in Example 2 except that a 3.5 inch size specularly polished glass substrate was used as the substrate. An undercoat layer was not provided and the disc was not built in a cartridge.

COMPARATIVE EXAMPLE 1

A flexible disc was manufactured in the same manner as in Example 1 except for changing the thickness of the magnetic layer to 50 nm.

COMPARATIVE EXAMPLE 2

A flexible disc was manufactured in the same manner as in Example 1 except for forming the magnetic layer on the condition of Ar pressure of 1.5 mTorr (0.2 Pa).

Evaluating methods:

1. Magnetic characteristics

Coercive force (Hc) and coercive force squareness ratio (S*) were measured with a sample vibrating magnetometer (VSM). The results obtained are shown in Table 1 below.

2. Recording and reproducing characteristics

Recording and reproduction of linear recording density of 400 kFCI were performed with a GMR head having a reproduction track breadth of 0.25 μm and a reproduction gap of 0.09 μm, and reproduction signal/noise (S/N) ratio and noise characteristics were measured. The engine speed was 4,200 rpm and the radial position was 35 mm at this time. Taking the S/N value and noise value in Example 1 as criteria respectively, and each value was shown as the increase or decrease from each criterion. The results obtained are shown in Table 1 below.

TABLE 1

| Example No. | Hc (kA/m) | Coercive Force Squareness Ratio (S*) | S/N (dB) | Noise (dB) |
|---|---|---|---|---|
| Example 1 | 250 | 0.65 | 0 | 0 |
| Example 2 | 255 | 0.67 | +1.0 | +0.1 |
| Example 3 | 260 | 0.51 | +1.4 | -1.6 |
| Example 4 | 280 | 0.49 | -0.2 | -1.5 |
| Example 5 | 240 | 0.74 | -0.8 | +0.6 |
| Example 6 | 250 | 0.66 | 0 | -0.2 |
| Comparative Example 1 | 230 | 0.81 | -3.6 | +3.8 |
| Comparative Example 2 | 190 190 | 0.83 | -4.2 | +3.8 |

It can be see from the results shown in Table 1 that flexible discs and hard disc in Examples that are magnetic recording media according to the invention attain low noise characteristics in high density recording and reproduction with the GMR head. On the other hand, in Comparative Example 1 having a thicker magnetic layer and in Comparative Example 2 wherein the magnetic layer was formed on the condition of Ar pressure of 1.5 mTorr (0.2 Pa) , the coercive force squareness ratio (S*) is 0.8 or higher, the segregation of magnetic particles is not sufficient, so that noise conspicuously increases, and S/N characteristics are inferior and unsatisfactory.

The magnetic recording medium according to the present invention has a granular structure ferromagnetic metal thin film magnetic layer comprising a ferromagnetic metal alloy and a nonmagnetic oxide. By making the coercive force squareness ratio (S*) 0.8 or less, the magnetic recording medium according to the invention is preferably used in a high density magnetic recording apparatus, is low in the interaction among magnetic particles, is low in noise, is capable of highly reliable recording, and can be manufactured inexpensively at room temperature.

This application is based on Japanese Patent application JP 2003-169405, filed June 13, 2003, the entire content of which is hereby incorporated by reference, the same as if set forth at length.

**Claims**

1. A magnetic recording medium comprising: a nonmagnetic substrate; an under layer; and a magnetic layer in this order, wherein the magnetic layer has a granular structure comprising a ferromagnetic metal alloy and a nonmagnetic oxide, and a coercive force squareness ratio S* of the magnetic layer satisfies the following relational expression (1):

$$S^* \leqq 0.8 \tag{1}$$

2. The magnetic recording medium according to claim 1, wherein the nonmagnetic substrate is a flexible polymer support.

3. The magnetic recording medium according to claim 1, wherein the nonmagnetic substrate is a glass substrate or an aluminum substrate, and a temperature of the substrate in forming the under layer and the magnetic layer is from 0 to 80°C.

4. The magnetic recording medium according to claim 1, wherein the coercive force squareness ratio S* satisfies the following relational expression (2):

$$0.3 \leqq S^* \leqq 0.75 \tag{2}$$

5. The magnetic recording medium according to claim 1, wherein the magnetic layer has a thickness of from 5 to 40 nm.

6. The magnetic recording medium according to claim 1, wherein the magnetic layer has a thickness of from 5 to 30 nm.

7. The magnetic recording medium according to claim 1, wherein the under layer contains an alloy containing Ru.

8. The magnetic recording medium according to claim 1, wherein the under layer has a thickness of from 5 to 200 nm.

9. The magnetic recording medium according to claim 1, further comprising an undercoat layer so that the nonmagnetic substrate, the undercoat layer and the under layer are in this order, wherein the undercoat layer contains at least one of a polyimide resin, a polyamideimide resin, a silicone resin and a fluorine resin.

10. The magnetic recording medium according to claim 1, wherein the undercoat layer has a thickness of from 0.1 to 3.0 µm.

**European Patent Office**

# PARTIAL EUROPEAN SEARCH REPORT

which under Rule 45 of the European Patent Convention shall be considered, for the purposes of subsequent proceedings, as the European search report

**Application Number**

EP 04 01 3857

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 2001 126246 A (FUJI) 11 May 2001 (2001-05-11) | 1,2,4-10 | G11B5/64 |
| Y | * paragraphs [0001], [0020], [0022], [0026] - [0028], [0051], [0053], [0056] * | 3 | |
| | ----- | | |
| X | US 6 277 484 B1 (SHIMODA ET AL.) 21 August 2001 (2001-08-21) | 1,2,4-6, 8,10 | |
| Y | * column 2, line 66 - line 67 * * column 3, line 3 - line 19 * * column 4, line 11 - line 14 * * column 4, line 28 - line 37 * * column 4, line 50 - line 61 * * column 5, line 7 - line 18 * * column 5, line 39 - line 53 * * column 6, line 5 - line 14 * * column 8, line 27 - line 45 * * column 10, line 35 - line 57; figures 1,6 * | 3 | |
| | ----- | | |

**TECHNICAL FIELDS SEARCHED** (Int.Cl.7)

G11B

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 6 September 2004 | Magrizos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH
SHEET C**

Application Number

EP 04 01 3857

Claim(s) searched incompletely:
        1-10

Reason for the limitation of the search:

Present claims 1-10 relate to a product defined by reference to a desirable characteristic or property, namely the coercive force squareness ratio. The claims cover all products having this characteristic or property, whereas the application provides support within the meaning of Article 84 EPC and/or disclosure within the meaning of Article 83 EPC for only a very limited number of such products. In the present case, the claims so lack support, and the application so lacks disclosure, that a meaningful search over the whole of the claimed scope is impossible. Independent of the above reasoning, the claims also lack clarity (Article 84 EPC). An attempt is made to define the product by reference to a result to be achieved. Again, this lack of clarity in the present case is such as to render a meaningful search over the whole of the claimed scope impossible. Consequently, the search has been carried out for those parts of the claims which appear to be clear, supported and disclosed, namely those parts relating to the products prepared in the examples or mentioned in the description at page 13, lines 13-25.

## ANNEX TO THE EUROPEAN SEARCH REPORT
## ON EUROPEAN PATENT APPLICATION NO.

EP 04 01 3857

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2004

| Patent document cited in search report | | Publication date | Patent family member(s) | | Publication date |
|---|---|---|---|---|---|
| JP 2001126246 | A | 11-05-2001 | NONE | | |
| US 6277484 | B1 | 21-08-2001 | JP | 11328650 A | 30-11-1999 |